# EUROPÄISCHE PATENTSCHRIFT

(11) **EP 1 853 404 B1**
(45) Veröffentlichungstag und Bekanntmachung des Hinweises auf die Patenterteilung: **12.08.2009**
(21) Anmeldenummer: 06706548.2
(22) Anmeldetag: 01.02.2006
(51) Int. Cl.: B23K 20/10, B29C 65/08, B23K 101/32

(54) **ULTRASCHALLSCHWEISSVORRICHTUNG MIT EINEN VERDICHTUNGSRAUM BEGRENZENDEN GEGENÜBERLIEGENDEN SCHWEISS- UND SEITENFLÄCHE SOWIE EIN WERKZEUG FÜR EINE SOLCHE ULTRASCHALLSCHWEISSVORRICHTUNG**
ULTRASOUND WELDING DEVICE WITH OPPOSITE WELDING AND LATERAL SURFACES THAT DELIMIT A COMPRESSION SPACE, AND A TOOL FOR SUCH AN ULTRASOUND WELDING DEVICE
DISPOSITIF DE SOUDAGE AUX ULTRASONS COMPRENANT DES SURFACES DE SOUDAGE ET DES SURFACES LATERALES OPPOSEES DELIMITANT UNE CHAMBRE DE COMPRESSION, ET UN OUTIL POUR UN TEL DISPOSITIF DE SOUDAGE AUX ULTRASONS

(30) Priorität: 02.02.2005 DE 102005004899
(43) Veröffentlichungstag der Anmeldung: 14.11.2007
(73) Patentinhaber: Schunk Sonosystems GmbH, 35435 Wettenberg (DE)
(72) Erfinder: EBERBACH, Jost, 35418 Buseck (DE); STROH, Dieter, 35435 Wettenberg (DE); DIETERLE, Horst, 35096 Niederweimar (DE); STROH, Heiko, 35435 Wettenberg (DE)
(74) Vertreter: Stoffregen, Hans-Herbert
(86) Internationale Anmeldenummer: PCT/EP2006/000870
(87) Internationale Veröffentlichungsnummer: WO 2006/082037

(56) Entgegenhaltungen:
- CH-A- 525 755
- GB-A- 2 012 211
- US-A- 4 596 352
- US-A- 6 089 438
- US-A- 6 158 645
- US-A1- 2002 130 159
- US-B1- 6 299 052
- PATENT ABSTRACTS OF JAPAN Bd. 010, Nr. 051 (M-457), 28. Februar 1986 (1986-02-28) -& JP 60 201928 A (YOSHINO KOGYOSHO CO LTD), 12. Oktober 1985 (1985-10-12)

## Beschreibung

Die Erfindung bezieht sich auf eine Ultraschallschweißvorrichtung zum Verschweißen von metallischen Leitern wie Litzen, insbesondere zur Herstellung eines Knotenpunktes gemäß dem Oberbegriff des Anspruchs 1. Ferner nimmt die Erfindung Bezug auf ein Werkzeug zur Verwendung in einer entsprechende Ultraschallschweißvorrichtung gemäß dem Oberbegriff des Anspruchs 16 (siehe, z.B. US 6 299 052 für diese beiden Ansprüche).

Mittels Ultraschall können sowohl Kunststoffe als auch Metalle geschweißt werden. Dabei werden beim Ultraschallschweißen von Metallen die mechanischen Schwingungen parallel zur Fügefläche ausgerichtet. Es kommt zu einer komplexen Beziehung zwischen statischer Kraft, den oszillierenden Scherkräfte und einem moderaten Temperaturanstieg in der Schweißzone. Hierzu werden die Werkstücke zwischen der schwingenden Sonotrode und einer statischen ggf. zu der Sonotrode verstellbaren Gegetielektrode angeordnet, die mehrteilig ausgebildet sein kann, um mit der Sonotrode, d. h. Arbeitsfläche deren Kopfes einen Verdichtungsraum zu begrenzen. Dieser kann nach den Lehren der EP-B-0.143 936 (US-A-4 596 352) oder der DE-C-35 08 122 in zwei senkrecht zueinander verlaufenden Richtungen, insbesondere Höhe und Breite verstellbar ausgebildet sein.

Hierdurch ergibt sich ein Anpassen an Querschnitte von zum Beispiel zu verschweißenden Leitern.

In dem bekannten einen im Wesentlichen rechteckigen Querschnitt aufweisenden Verdichtungsraum werden die den Verdichtungsraum in seinen offenen Seiten durchsetzenden Litzen mittels Ultraschall zu Durchgangs- oder Endknoten verschweißt. Bei schlecht zu verschweißenden Leitern ergibt sich der Nachteil, dass die Litzen in ihrer Längsrichtung beim Verschweißen bewegt werden, so dass diese über den Knotenpunkt vorstehen. Um diese Längsbewegung zu reduzieren, wird im Vergleich zu gut verschweißbaren Litzen der Energieeintrag bzw. die Druckbeaufschlagung während des Schweißens verringert. Dies fuhrt jedoch zu einer reduzierten Festigkeit.

Ein in Höhe und Breite verstellbarer Verdichtungsraum einer Ultraschallschweißvorrichtung ist der US-B-6 299 052 zu entnehmen. Dabei sind die Arbeitsflächen von Sonotrode und Gegenelektrode strukturiert. Die verbleibenden Begrenzungsflächen sind eben ausgebildet.

Um Metallteile miteinander zu verschweißen, sind nach der US-A-6 089 438, der US-A-6 158 645 und der US-A-2002/130159 Sonotrode und Gegenelektrode in ihren Arbeitsflächen strukturiert.

Um Kunststoffe zu verschweißen, können nach der CH-A-525 755 oder der JP-A-60 201928 Sonotrode bzw. Sonotrode und Amboss strukturiert sein.

Um eine Vielzahl von Schweißpunkten beim Verschweißen von Kunststoffen gleichzeitig auszubilden, sieht die GB-A-2 012 211 pyramidförmig ausgebildete Vorsprünge in den Arbeitsflächen von Sonotrode und Amboss einer Ultraschallschweißvorrichtung vor.

Der vorliegenden Erfindung liegt die Aufgabe zugrunde, eine Ultraschallscbweißvorrichtung mit Verdichtungsraum bzw. ein einen solchen begrenzendes Werkzeug derart weiterzubilden, dass auch bei schlechtverschweißbaren Leitern eine gute Qualität er zielbar ist, wobei ein Wandern der Leiter zum Beispiel bei hohem Energieeintrag bzw. Druckeinwirkung ausgeschlossen werden soll.

Zur Lösung der Aufgabe sieht die Erfindung im Wesentlichen vor, dass zumindest eine der Seitenbegrenzungsflächen, vorzugsweise beide Seitenbegrenzungsflächen, zumindest bereichsweise strukturiert sind. Dabei ist die Strukturierung derart gewählt, dass diese im Wesentlichen quer zur Längsachse des Verdichtungsraums, also zur Längsachse der zu verschweißenden Leitern verläuft, wodurch eine Längsbewegung der Leiter unterbunden werden kann, so dass bei üblichen bzw. erhöhten Energien und Drücken geschweißt werden, ohne dass die Güte der Schweißverbindung beeinträchtigt wird.

Insbesondere ist vorgesehen, dass zumindest eine Begrenzungsfläche eine Struktur bzw. Profilierung aufweist, die durch quer zur Längsachse des Verdichtungsraums verlaufende Vertiefungen bzw. Erhebungen gebildet wird. Die Vertiefungen verlaufen dabei zurückversetzt zur von der Begrenzungsfläche aufgespannten Ebene. Entsprechend stehen die Erhebungen über der Ebene vor.

Besteht die Möglichkeit, die Struktur gleichmäßig über die Begrenzungsfläche zu verteilen, so sieht eine Weiterbildung der Erfindung vor, dass die Begrenzungsfläche nur bereichsweise strukturiert ist. Insbesondere kann die Struktur in Gruppen aufgeteilt sein, die zueinander beabstandet sind. In den Zwischenbereichen können die Begrenzungsflächen eben ausgebildet sein. Auch können die Gruppen von Strukturen ineinander übergehen, wobei gegebenenfalls die Struktur einer Gruppe von der Struktur einer anderen Gruppe abweicht.

Insbesondere ist vorgesehen, dass die Struktur durch sägezahnförmige Erhebungen gebildet ist, wobei zwei Gruppen von sägezahnähnlichen Erhebungen vorgesehen sein können, so dass sich beim Zusammenwirken mit den zu verschweißenden Leitern quasi Begrenzungsflächen mit Widerhaken ergeben, die ein Wandern der zu verschweißenden Leitern ausschließen.

Ein weiterer Vorschlag sieht vor, dass die Gegenelektrode von einem entlang einer Seitenfläche der Sonotrode und senkrecht oder in etwa senkrecht zu der Arbeitsfläche der Sonotrode verlaufenden Träger ausgeht, dessen dem Verdichtungsraum zugewandte Seite eine Seitenbegrenzungsfläche ist oder von der ein außenseitig die Seitenbegrenzungsfläche aufweisendes vorzugsweise plattenförmiges Element ausgeht, und dass die Struktur der Seitenbegrenzungsfläche ergänzend zur Struktur der Seitenfläche der Sonotrode ausgebildet ist. Hierdurch ergibt sich quasi eine labyrinthartige Abdichtung zwischen den entlang gleitenden Flächen mit der Folge, dass Litzen nicht in den zwischen den Flächen verlaufenden Spalt beim Bewegen der Gegenelektrode in Richtung der Sonotrode eindringen können.

Die Struktur wird vorzugsweise von linien- oder rinnenförmigen Vertiefungen bzw. entsprechend verlaufenden rippenartigen Erhebungen oder Vorsprüngen gebildet, die insbesondere einen Querschnitt von zum Beispiel einem Dreieck, einem Trapez oder einem Kreisabschnitt aufweisen. Auch besteht die Möglichkeit, die Erhebungen bzw. Vertiefungen im Schnitt wellenförmig auszubilden.

Die der Erfindung zugrunde liegende Aufgabe wird auch dadurch gelöst, dass das die Seitenbegrenzungsfläche aufweisende Werkzeug strukturiert ist, wobei bevorzugterweise vorgesehen ist, dass die Struktur bzw. Profilierung quer zur Längsrichtung des von der Seitenbegrenzungsfläche begrenzten Verdichtungsraum ausgeprägt ist

Insbesondere ist vorgesehen, dass die Erhebungen über von der Seitenbegrenzungsfläche aufgespannter Ebene vorstehen bzw. Vertiefungen zurückversetzt zu der Ebene verlaufen. Als Erhebungen kommen auch sägezahnförmige Geometrien in Frage, wobei die Erhebungen vorzugsweise in zwei Gruppen aufgeteilt sind, deren Kanten einander zugewandt sind.

Losgelöst hiervon können die rippenartigen Erhebungen und/oder rinnenförmigen Vertiefungen einen Querschnitt von vorzugsweise einem Dreieck, einem Trapez oder einem Kreisabschnitt aufweisen. Andere geeignete Geometrien, die sicherstellen, dass ein Wandern der zu verschweißenden Leiter unterbleibt, sind gleichfalls möglich.

Die in den Seitenflächen vorgesehene Strukturierung bzw. Profilierung kann auch in den Arbeits- bzw. Schweißflächen der Sonotrode und/oder des Ambosses vorgesehen sein.

Um zu vermeiden, dass die Sonotrode beim Verschweißen senkrecht zu ihrer Längsachse stark ausgelenkt wird, wodurch sich ein Spalt zwischen der von der Sonotrode ausgehenden Arbeitsfläche und den zu verschweißenden Teilen ergeben könnte, ist vorgesehen, dass Stirnfläche der Sonotrode und/oder Rückseite eines die Arbeitsfläche aufweisenden Sonotrodenkopfes zumindest eine Versteifung wie Rippe aufweist. Dabei kann die Versteifung in Sonotrodenlängsachsenrichtung im Schnitt eine dreieckförmige Geometrie aufweisen.

Bevorzugterweise steht die Versteifung vom Umfangsrand der Stirnfläche bzw. der Arbeitsfläche der Sonotrode ausgehend in Richtung der Sonotrodenlängsachse zunehmend über der Stirnfläche vor. Dabei kann die Versteifung insbesondere senkrecht zu der Arbeitsfläche verlaufen.

Besteht die Möglichkeit, dass die Versteifung über der gesamten oder im Wesentlichen gesamten Stirnfläche der Sonotrode vorsteht, ist auch die Möglichkeit gegeben, dass die ein unerwünschtes Durchbiegen der Sonotrode verhindernde Versteifung nur abschnittsweise vorzugsweise von der Stirnfläche der Sonotrode ausgehend und über diese vorstehend ausgebildet ist.

Die Versteifung kann linienförmig oder wulstartig ausgebildet sein. Insbesondere ist jedoch die Versteifung symmetrisch zu einer Ebene ausgebildet, in der die Sonotrodenlängsachse verläuft.

Losgelöst hiervon sollte die Sonotrode derart versteift sein, dass bei Ultraschallerregung sich eine Auslenkung in Richtung der Längsachse A_{Z} und senkrecht zur Arbeitsfläche eine Auslenkung A_{Y} ergibt mit der Beziehung 3 ≤ A_{Z}/A_{Y} ≤ 20:

Geometrisch günstige Bedingungen ergeben sich insbesondere dann, wenn maximale Erstreckung der Versteifung über der Stirnfläche im Bereich zwischen 3 mm und 25 mm, vorzugsweise zwischen 5 mm und 15 mm beträgt.

Weitere Einzelheiten, Vorteile und Merkmale der Erfindung ergeben sich nicht nur aus den Ansprüchen, den diesen zu entnehmenden Merlanalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißvorrichtung,
- Fig. 2 - 4: verschiedene perspektivische Darstellungen von einen Verdichtungsraum umgebenden Elementen,
- Fig. 5: einen Schnitt durch ein Begrenzungselement,
- Fig. 6: eine alternative Gestaltung des Begrenzungselementes gemäß Fig. 5 im Ausschnitt,
- Fig. 7: eine Schnittdarstellung einer weiteren Ausführungsform eines Begren- zungselementes,
- Fig. 8: in vergrößerter Darstellung eine alternative Ausführungsform zu Fig. 7,
- Fig. 9: eine Schnittdarstellung einer dritten Ausführungsform eines Begrenzungs- elementes,
- Fig. 10: eine vierte Ausführungsform eines Begrenzungselementes im Schnitt,
- Fig. 11: eine fünfte Ausführungsform eines Begrenzungselementes im Schnitt,
- Fig. 12: eine sechste Ausführungsform eines Begrenzungselementes im Schnitt,
- Fig. 13: eine weitere Ausführungsform eines Begrenzungselementes mit einem Ab- schnitt einer Sonotrode im Schnitt,
- Fig. 14: eine Prinzipdarstellung (finite Elementberechnung) einer Sonotrode,
- Fig. 15: eine Prinzipdarstellung (finite Elementberechnung) einer Ausgestaltung einer Sonotrode,
- Fig. 16: eine besondere Ausführungsform einer Sonotrode,
- Fig. 17: eine weitere Ausführungsform einer Sonotrode,
- Fig. 18: eine Vorderansicht der Sonotrode gemäß Fig. 17 und
- Fig. 19: eine weitere Ausführungsform eines Begrenzungselements.

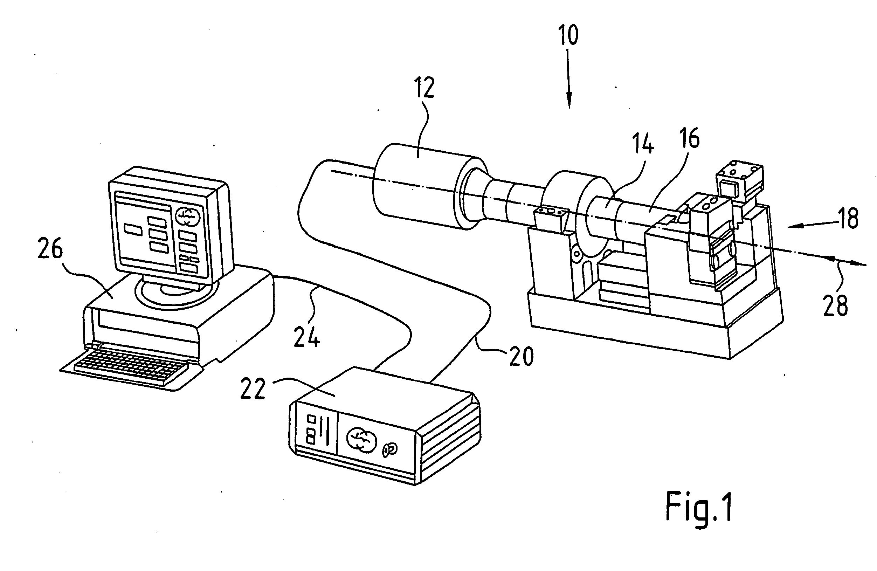

In Fig. 1 ist rein prinzipiell eine Ultraschallschweißanordnung dargestellt, mittels der Metallteile in Form von Litzen miteinander verschweißt werden sollen, um ein bevorzugtes Anwendungsbeispiel zu nennen.

Die Ultraschallschweißvorrichtung umfasst einen Schwinger 10, der im Ausführungsbeispiel aus einem Konverter 12, einem Booster 14 und einer Sonotrode 16 besteht. Die Sonotrode 16 begrenzt dabei einen nachstehend näher zu erläuternden Verdichtungs raum 18. Ein grundsätzlicher Aufbau eines entsprechenden Verdichtungsraums ist zum Beispiel der US-A-4,869,419 zu entnehmen.

Bekannterweise ist der Konverter 12 über eine Leitung 20 mit einem Generator 22 verbunden, der seinerseits über eine Leitung 24 an einen Rechner 26 angeschlossen ist, über den der Generator 22 gesteuert wird, um sodann über den Konverter 12 elektrische in mechanische Schwingungen über zum Beispiel Piezoelemente umzuwandeln, wobei die Schwingungen über den Booster 14 verstärkt werden, um sodann entsprechend die Sonotrode 16 zu erregen.

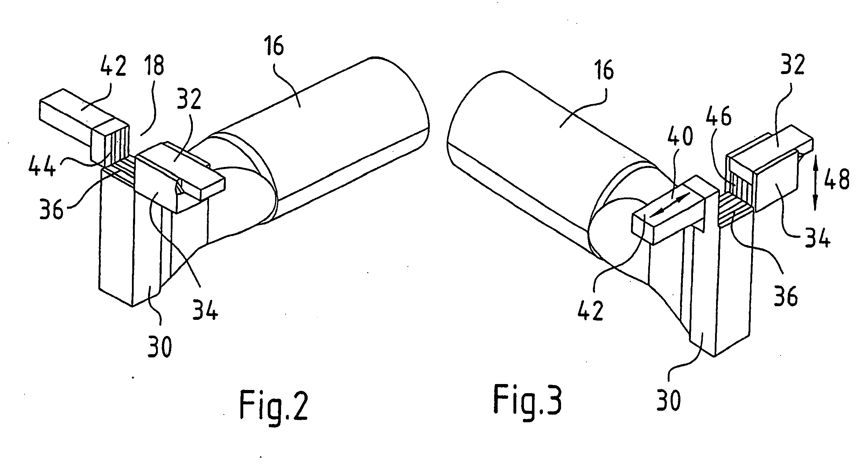

Um in dem im Querschnitt rechteckförmigen Verdichtungsraum 18 mit offenen Stirnseiten auch schlecht schweißbare Leiter wie Litzen zu einem Knoten hinreichender Güte zu verschweißen, ohne dass das Risiko erwächst, dass die Leiter während des Verschweißens in die Stirnseiten durchsetzender Längsrichtung des Verdichtungsraums, also in Richtung des Pfeils 28 wandern, ist erfindungsgemäß vorgesehen, dass der Verdichtungsraum 18 in zumindest drei Begrenzungsflächen, vorzugsweise in allen vier Begrenzungsflächen strukturiert ist. Dies ergibt sich aus den Fig. 2 bis 4. So ist rein prinzipiell und in perspektivischer Darstellung die Sonotrode 16 mit Sonotrodenkopf 30 dargestellt, dem ein als Gegenelektrode 32 zu bezeichnender Amboss zugeordnet ist, der von einem entlang des Sonotrodenkopfs 30 verstellbaren Träger 34 ausgeht. Insoweit ist eine Konstruktion gewählt, wie diese beispielhaft der US-A-4,869,419 zu entnehmen ist.

Mit anderen Worten wird der Verdichtungsraum 18 von einer Arbeits- oder Schweißfläche 36 des Sonotrodenkopfs 30 und einer gegenüberliegenden Arbeits- oder Schweißfläche 38 des Amboss 32 begrenzt, die jeweils strukturiert sind.

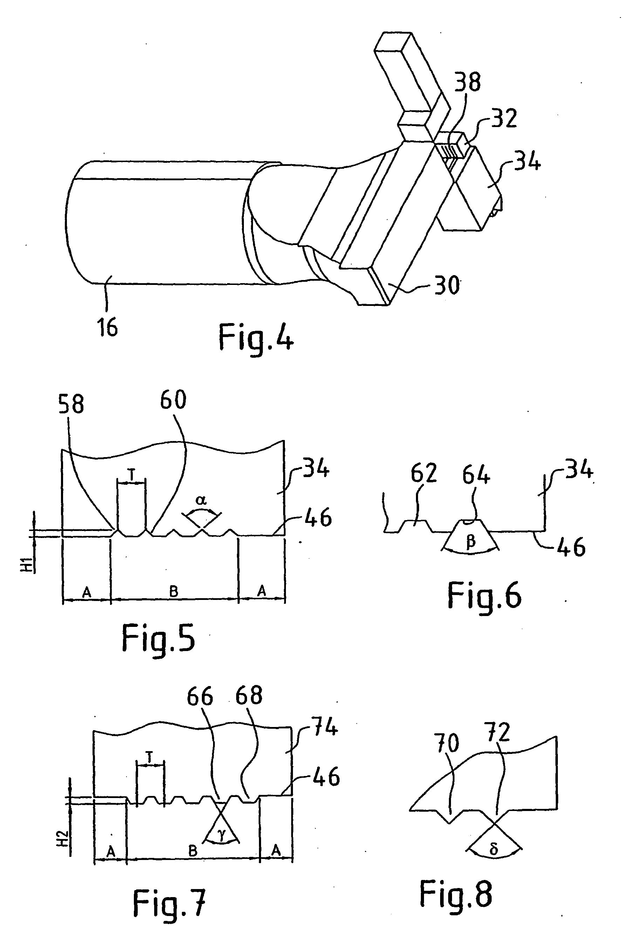

Um den Verdichtungsraum 18 sowohl in Höhe als auch in Breite verstellen zu können, verläuft quer zu den Schweißflächen 36, 38 ein im Ausführungsbeispiel in Richtung des Pfeils 40 verstellbarer Seitenschieber 42 mit den Verdichtungsraum 18 seitlich begrenzender Seitenbegrenzungsfläche 44, die erfindungsgemäß strukturiert ist. Gegenüberliegende Seitenbegrenzungsfläche 46, die von dem Träger 34 des Ambosses 32 oder einem von dem Träger 34 ausgehenden Plattenelement gebildet wird, ist ebenfalls strukturiert. Spezielle Geometrien der entsprechenden Strukturen der Seitenbegrenzungsflächen 44, 46 ergeben sich aus den Fig. 5 bis 13.

Um den Verdichtungsraum 18 auf den Querschnitt der zu verschweißenden Leiter einstellen zu können, ist nicht nur der Seitenschieber 42 in Richtung des Pfeils 40, sondern der Träger 34 ist entlang des Sonotrodenkopfs 30, also entlang des Pfeils 48 verstellbar, wodurch der Abstand zwischen den Arbeitsflächen 36, 38 von Sonotrodenkopf 30 und Amboss 32 verändert wird.

Um beim Verschweißen von Litzen auszuschließen, dass diese in deren Längsrichtung, also aus dem Verdichtungsraum 18 herauswandern können, sind erfindungsgemäß erwähntermaßen nicht nur die Schweißflächen 36 und 38, sondern auch die Seitenbegrenzungsflächen 44, 46 strukturiert.

Ist bevorzugterweise jede Seitenbegrenzungsfläche 44, 46 strukturiert, so besteht ohne Weiteres auch die Möglichkeit, dass nur eine der Flächen 44 bzw. 46 eine entsprechende Struktur aufweist. Losgelöst hiervon sollte sich die Struktur 44, 46 jedoch quer zur Längsrichtung (Pfeil 28) des Verdichtungsraums 18 erstrecken, also quer zur Längsachse der zu verschweißenden Leiter.

Bevorzugte Strukturen sind beispielhaft anhand einer Schnittdarstellung des den Amboss 32 aufnehmenden Trägers 34 zu entnehmen, der in den Fig. 5 bis 13 entsprechend mit dem Bezugszeichen 34 gekennzeichnet ist. Entsprechende Strukturierungen kann auch der Seitenschieber 42, d.h. dessen Begrenzungsfläche 44 aufweisen.

Der Träger 34 gemäß Fig. 5 weist an seiner Seitenbegrenzungsfläche 46 drei parallel zueinander verlaufende Bereiche A, B, A auf, die streifenförmig ausgebildet sind und sich entlang des Doppelpfeils 48 in Fig. 3 erstrecken. Die äußeren Bereiche A weisen eine gleiche Breite auf, wohingegen der mittlere Bereich B breiter gewählt ist.

Der mittlere Bereich B weist gegenüber der von der Seitenbegrenzungsfläche 46 aufgespannten Ebene zurückversetzte rinnenförmige Vertiefungen 58, 60 auf, die parallel zueinander und parallel oder in etwa parallel zu der Bewegungsrichtung des Trägers 34 und damit senkrecht oder in etwa senkrecht zu den Schweiß- oder Arbeitsflächen 36, 38 des Sonotrodenkopfes 30 bzw. des Ambosses 32 verlaufen.

Im Ausführungsbeispiel der Fig. 5 sind die rinnen- oder rillenförmigen Vertiefungen 58, 60 zueinander im Abstand T verlaufend angeordnet und weisen im Schnitt eine Dreiecksgeometrie auf, wobei die Schenkel einen Winkel α mit 30° ≤ α ≤ 120° einschließen. Der Abstand T beläuft sich vorzugsweise auf 0,4 mm ≤ T ≤ 3,0 mm.

Die Tiefe H der auch als Gräben zu bezeichnenden Vertiefungen beträgt zum Beispiel 0,03 mm ≤H1 ≤ 0,5 mm.

Alternativ besteht gemäß Fig. 6 die Möglichkeit, die rinnenförmigen Vertiefungen 62, 64 derart zu gestalten, dass sich im Schnitt trapezförmige Profilierung ergibt, wobei die Querschenkel einen Winkel 30° ≤ β ≤ 120° zueinander beschreiben.

Wird nach den Fig. 5 und 6 die Profilierung bzw. Struktur der Seitenbegrenzungsfläche 46 des Trägers 34 durch Vertiefungen gebildet, so besteht entsprechend der Darstellungen in den Fig. 7 und 8 auch die Möglichkeit, eine entsprechende Struktur durch Erhebungen 66, 68 zu bilden, die im Schnitt eine Trapezgeometrie (Fig. 7) oder Dreiecksgeometrie (Fig. 8) aufweisen können. Die entsprechenden Erhebungen 66, 68 bzw. 70, 72 stehen mit einem Maß H2 mit 0,03 mm ≤ H2 ≤ 0,5 mm über der von der Seitenbegrenzungsfläche 52 aufgespannten Ebene vor. Die Seitenschenkel der Vorsprünge 66, 68 bzw. 70, 72 schließen dabei einen Winkel γ (Fig. 7) mit 30° ≤ γ ≤ 120° bzw. δ (Fig. 8) mit 30° ≤ δ ≤120° ein.

Ist bei den Ausführungsbeispielen der Fig. 5 - 8 die Profilierung nur in einem Bereich der Seitenbegrenzungsfläche 46, und zwar in dem Bereich B und nicht in den Randbereichen A vorgesehen, so kann sich die Struktur auch in einem anderen Bereich der Seitenbegrenzungsfläche 46 erstrecken.

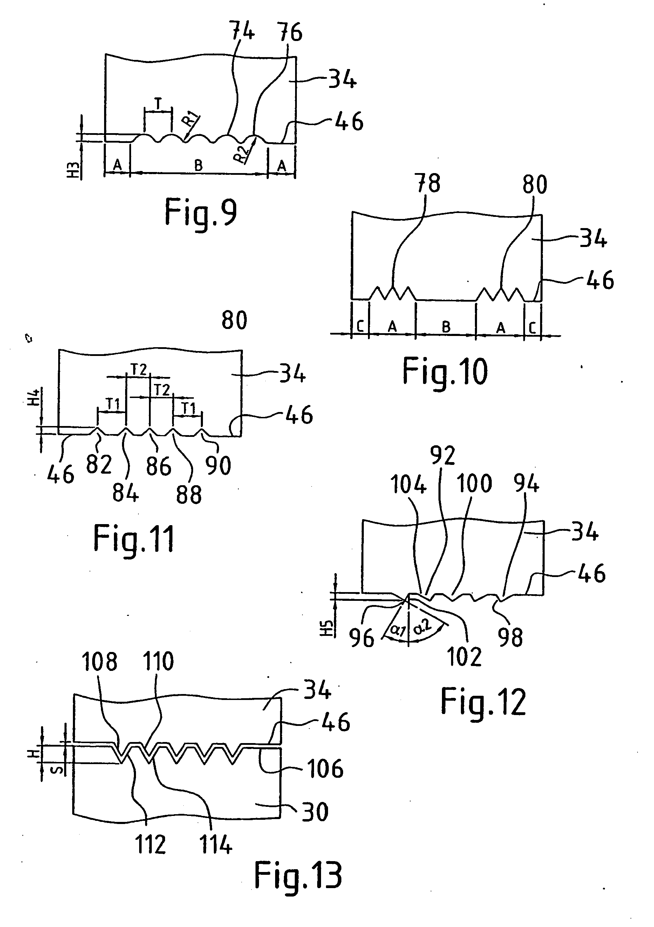

Entsprechend den Darstellungen gemäß Fig. 9 besteht die Möglichkeit, den Bereich B, innerhalb dessen eine Strukturierung vorgesehen ist, breiter zu wählen als im Ausführungsbeispiel der Fig. 5 bis 8. So ist - wie ein Vergleich der Fig. 5 bis 8 einerseits und Fig. 9 andererseits verdeutlicht - der die Struktur aufweisende mittlere Bereich B erheblich breiter als die Randbereiche A.

Die Profilierung bzw. Strukturierung der Seitenbegrenzungsfläche 46 gemäß Fig. 9 wird durch rinnenförmige Vertiefungen 74, 76 oder Gräben gebildet, die gegenüber der von der Seitenbegrenzungsfläche 46 aufgespannten Ebene um das Maß H3 mit 0,03 mm ≤ H3 ≤ 0,5 mm zurückversetzt verlaufen. Die in Bezug auf die Seitenbegrenzungsfläche 46 konkav verlaufenden Bereiche 74, 76 weisen einen Krümmungsradius R2 mit 0,3 mm ≤ R2 ≤ 2,0 mm und die konvex verlaufenden Abschnitte einen Krümmungsradius R1 mit 0,3 mm ≤ R1 ≤ 2,0 mm auf. Der Abstand zwischen den rinnenförmigen Vertiefungen 74, 76 beträgt T mit 0,4 mm ≤T ≤ 3,0 mm.

Ist bei den Ausführungsbeispielen der Fig. 5 bis 9 vorgesehen, dass der mittlere Bereich B strukturiert ist, so ist entsprechend der Fig. 10 eine Profilierung des Trägers 34 bzw. dessen Seitenbegrenzungsfläche 46 dadurch erreicht, dass der mittlere Bereich B eben ausgebildet ist, an den sich Bereiche A anschließen, die eine Profilierung 78, 80 aufweisen. Die Bereiche A sind sodann von Randbereichen C begrenzt, die wiederum nicht profiliert sind.

Unabhängig davon, wo die Profilierung bzw. Strukturierung der Seitenbegrenzungsfläche 46 des Trägers 34 verlaufen, ist dem Grunde nach eine Symmetrie zur Mittellinie der Begrenzungsfläche 46 gegeben. Dies ist jedoch kein zwingendes Merkmal.

So verdeutlicht die Fig. 11, dass in einem mittleren Bereich rinnenförmig verlaufende Vertiefungen 82, 84, 86, 88, 90 in der Seitenbegrenzungsfläche 46 des Trägers 34 ausgebildet sind, die zueinander voneinander abweichende Abstände T₁ bzw. T₂ aufweisen. Unabhängig hiervon verlaufen die Vertiefungen, die mit einem Maß H4 mit 0,03 mm ≤ H4 ≤ 0,5 mm gegenüber der Seitenbegrenzungsfläche 46 zurückversetzt verlaufen, im mittleren Bereich dieser, so dass Randbereiche unprofiliert sind.

Die Fig. 12 zeigt eine besonders geartete Profilierung in Form von Sägezähnen, die mit einem Maß H5 mit 0,03 mm ≤ H5 ≤ 0,5 mm über der Seitenbegrenzungsfläche 46 des Trägers 34 vorstehen. Dabei sind die sägezahnartigen Vorsprünge 92, 94 in Gruppen aufgeteilt, die einander zugewandte Kanten 96, 98 aufweisen. Zwischen den Gruppen der sägezahnförmigen Vorsprünge 92, 94 verläuft ein im Schnitt ein gleichschenkliges Dreieck bildender Vorsprung 100, der vorzugsweise von der Mittellinie der Seitenbegrenzungsfläche 46 geschnitten wird.

Die Neigungswinkel der sägezahnförmigen Vorsprünge 92, 94 beläuft α₁ bezüglich der steil abfallenden Flanke 102 mit 0° ≤ α₁ ≤ 30° und α₂ bezüglich der flach abfallenden Flanke 104 mit 30° ≤ α₂ ≤ 120°.

Die den Fig. 5 bis 12 zu entnehmenden Profilierungen bzw. Strukturierungen der Seitenbegrenzungsflächen 46 des Trägers 34 können entsprechend in der Seitenbegrenzungsfläche 44 des Seitenschiebers 42 ausgebildet sein.

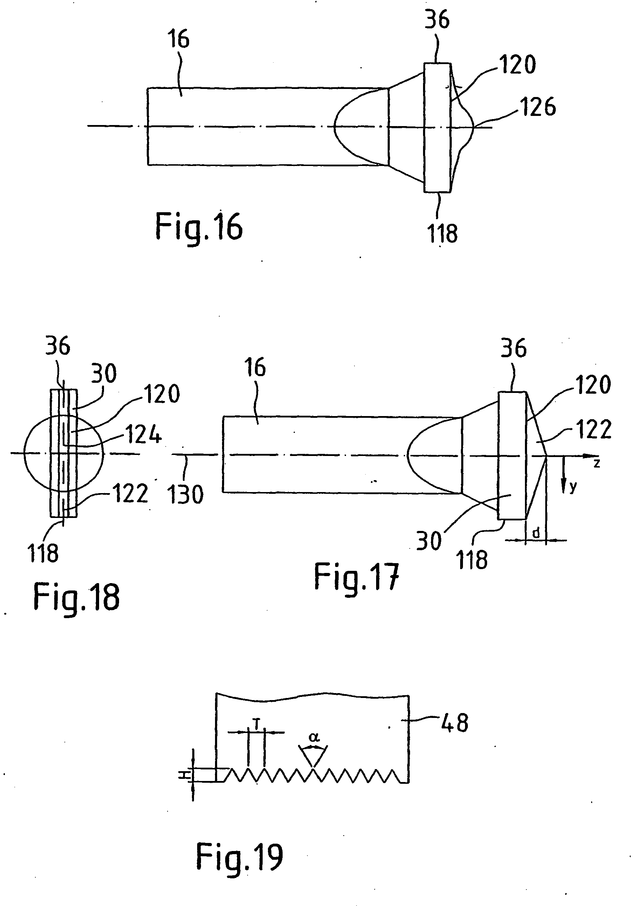

Die Profilierung bzw. Strukturierung der Seitenbegrenzungsfläche 46 kann sich selbstverständlich über die gesamte Fläche und nicht nur bereichsweise erstrecken. Beispielhaft ist in Fig. 18 eine Ausführungsform dargestellt, bei der die Strukturierung die gesamte Fläche des Begrenzungselements 46 abdeckt. Der Abstand T zwischen den Vertiefungen beläuft sich auf 0,4 mm ≤ T ≤ 3,0 mm, und der Winkel a der Seitenschenkel der im Schnitt eine Dreiecksgeometrie aufweisenden Erhebungen bzw. Vertiefungen beträgt vorzugsweise 30° ≤ α≤ 120°.

Um zu vermeiden, dass sich ein Spalt zwischen den entlang des Sonotrodenkopfs 30 verstellbaren Trägers 30 und zugewandter Fläche 106 des Sonotrodenkopfs 30 ausbildet, in den Litzen eindringen können, die die Bewegung des Trägers 34 entlang des Doppelpfeils 48 beim Absenken des Ambosses 32 beeinträchtigen könnten, ist eine Struktur bzw. Profilierung der einander zugewandten Flächen, also der Fläche 106 des Sonotrodenkopfs 30 und der Seitenbegrenzungsfläche 46 des Trägers 34 möglich, wie diese der Fig. 13 zu entnehmen ist. So weist die Begrenzungsfläche 46 des Trägers 34 im Schnitt dreieckförmige Vorsprünge 108, 110 auf, die mit Abstand in entsprechende im Schnitt dreieckförmige Vertiefungen 112, 114 in der Seitenfläche 106 des Sonotrodenkopfs 30 eindringen, so dass sich quasi eine Labyrinthdichtung ergibt, die ein Eindringen von Litzen verhindert.

Durch die Strukturierung nicht nur der Schweißflächen 36, 38, sondern der Seitenbegrenzungsflächen 44, 46 des Seitenschiebers 42 und des den Amboss 32 aufnehmenden Trägers 34 ergibt sich der Vorteil, dass auch beim Verbinden schwer schweißbarer Litzen ein Verbindungsknoten hoher Güte herstellbar ist, wobei eine gute Energieumsetzung bei gewünschten Druckeinwirkungen erfolgt. Das Schweißgut wird weniger geschädigt. Auch ist in Abhängigkeit von der vorgesehenen Strukturierung eine gezieltere Energieeinleitung möglich.

Anzumerken ist, dass die Flächen der Sonotrode und/oder des Ambosses, die den Verdichtungsraum begrenzen, die gleiche Profilierung bzw. Strukturierung wie die Seitenbegrenzungsflächen aufweisen können.

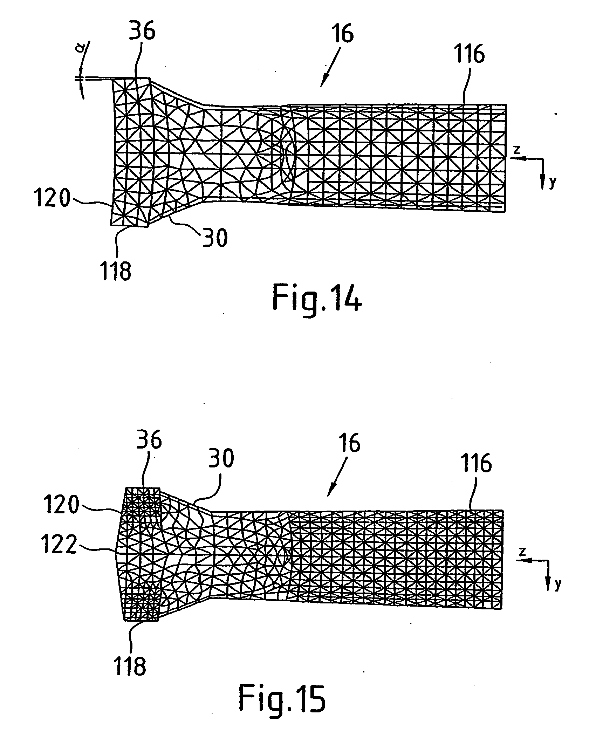

Anhand der Fig. 14 bis 18 soll eine weitere bevorzugte Ausgestaltung der Sonotrode 16 verdeutlicht werden, die jedoch nicht schutzeinschränkend zu verstehen ist. So ist in Fig. 14 die Sonotrode 16 in Finite Elementberechnung dargestellt. Die Sonotrode 16 besteht in gewohnter Weise aus einem Basiskörper 116 und dem von diesem ausgehenden Sonotrodenkopf 30, der seinerseits die in den Fig. 2 bis 4 dargestellte Arbeitsfläche oder Schweißfläche 36 aufweist. Diametral gegenüberliegend weist der Sonotrodenkopf 30 eine weitere Arbeits- oder Schweißfläche 118 auf, so dass die Sonotrode 16 um ihre Längsachse gedreht wird, um eine der Arbeitsflächen 36, 118 dem Verdichtungsraum 18 zuordnen zu können. Die Längsachse der Sonotrode 16 verläuft dabei parallel zur Z-Achse.

Die Arbeits- oder Schweißflächen 36, 118 werden von einer Stirnfläche 120 des Sonotrodenkopfs 30 begrenzt, die bei nicht erregter Sonotrode 16 senkrecht zu den Arbeitsflächen 36, 118 verläuft. Im Ausführungsbeispiel erstreckt sich die Stirnfläche 120 parallel zur Y-Achse und folglich die Arbeitsfläche 36 bzw. 118 bei nicht erregter Sonotrode 16 senkrecht zu der Y-Achse.

Beim Schweißen wird die Sonotrode 10 nicht nur in Sonotrodenlängsachsenrichtung Z, sondern auch in Y-Richtung ausgelenkt, wodurch eine Neigung der Arbeitsfläche 36, 118 (Winkel a) erfolgt. Hierdurch kann die Schweißgüte beeinflusst werden. Dabei kann in Abhängigkeit von der Auslenkung des Sonotrodenkopfs 30 in Y-Richtung die Reproduzierbarkeit der Schweißergebnisse beeinträchtigt werden.

Um diesbezügliche Nachteile zu vermeiden, kann der Sonotrodenkopf 30 von seiner Stirnfläche 120 ausgehend eine Versteifung 122 aufweisen, wodurch die Auslenkung der Sonotrode 16 in Y-Richtung reduziert wird. Durch die Versteifung 122 wird die Deformation des Sonotrodenkopfs 30 in Y-Richtung verringert bzw. eingeschränkt, so dass die Eigenschwingform der Sonotrode 16 verbessert wird.

Entsprechend der Fig. 16 bis 18, in denen für gleiche Elemente die Bezugszeichen der Fig. 14 und 15 benutzt werden, kann die Versteifung 122 dadurch realisiert werden, dass von der Stirnfläche 120 eine Rippe 124 abragt, die im Schnitt eine Dreiecksgeometrie (Fig. 17) oder eine gewölbte Geometrie (Fig. 16) aufweisen kann. Die im Schnitt eine Dreiecksgeometrie aufweisende Versteifung in Fig. 17 ist mit dem Bezugszeichen 122 und die gewölbte gemäß Fig. 16 mit dem Bezugszeichen 126 gekennzeichnet. Dabei ist insbesondere den Schnittdarstellungen gemäß den Fig. 16 und 17 zu entnehmen, dass die jeweilige Versteifung 122, 126 von der jeweiligen Arbeitsfläche 36, 118 ausgehend ansteigend über der Stirnfläche 120 vorsteht, wobei die maximale Erstreckung in Z-Richtung im Schnittpunkt mit der Mittelachse 130 der Sonotrode 16 liegt.

Der maximale Überstand d der Versteifung 122, 126 über der Stirnfläche 120 des Sonotrodenkopfs 30 sollte 15 mm betragen, gleichwenn auch andere Dimensionierungen je nach Ausbildung der Sonotrode in Frage kommen. Ein Überstand d von maximal 15 mm hat jedoch den Vorteil, dass entsprechende Sonotroden in bereits im Einsatz befindliche Ultraschallschweißvorrichtungen einbaubar sind.

Insbesondere sollte die Versteifung 122, 126 derart ausgelegt sein, dass die Auslenkung in Z-Richtung der Sonotrode 16 sich verhält zur Auslenkung der Sonotrode 16 in Y-Richtung wie 3 A_{z} ≤ A_{Z}/A_{Y}≤ 20.

Erstreckt sich die Versteifung 122, 126 in den Ausführungsbeispielen über die gesamte Höhe des Sonotrodenkopfs 30, so besteht auch die Möglichkeit, dass die Versteifung zum Beispiel im Mittenbereich der Stirnfläche 120, also beabstandet zu den Arbeitsflächen 136, 118 beginnend verläuft. Andere Geometrien sind gleichfalls möglich.

Ferner kann auch die Rückseite des äußeren die Arbeitsflächen 36, 118 aufweisenden Abschnitts des Sonotrodenkopfs 30 eine oder mehrere Versteifungen aufweisen, wobei gegebenenfalls die stirnseitig verlaufende Versteifung wegfällt. Verläuft die Versteifung auf der Rückseite, so ist die Flächenerstreckung des Innenabschnitts des Sonotrodenkopfs kleiner als die Flächenerstreckung des äußeren Abschnitts, der die zumindest eine Arbeitsfläche 36, 118 aufweist.

## Patentansprüche

1. Ultraschallschweißvorrichtung zum Verschweißen von metallischen Leitern, wie Litzen, insbesondere zur Herstellung eines Knotenpunktes, mit einem Verdichtungsraum, der zwei den Verdichtungsraum auf gegenüberliegenden Seiten begrenzende Arbeitsflächen (36, 38) und zwei quer zu den Arbeitsflächen verlaufende relativ zueinander verstellbare Seitenbegrenzungsflächen (44, 46) aufweist, wobei eine Arbeitsfläche Abschnitt einer in Ultraschallschwingung versetzbaren Sonotrode (16) der Ultraschallschweißvorrichtung und gegenüberliegende Arbeitsfläche Abschnitt einer Gegenelektrode (32) ist und die Arbeitsflächen strukturiert sind,
**dadurch gekennzeichnet,**
**dass** zumindest eine der Seitenbegrenzungsflächen (44, 46) des Verdichtungsraums (18) zumindest bereichsweise strukturiert ist.

2. Ultraschallschweißvorrichtung nach Anspruch 1,
**dadurch gekennzeichnet,**
**dass** jede der Seitenbegrenzungsflächen (44, 46) strukturiert ist.

3. Ultraschallschweißvorrichtung nach Anspruch 1 oder 2,
**dadurch gekennzeichnet,**
**dass** die Strukturierung aus rinnen- oder grabenförmigen Vertiefungen (58, 60, 62, 64, 74, 76, 92, 94, 82, 84, 86, 88, 90) und/oder rippenartige Erhebungen oder Vorsprünge (66, 68, 70, 72, 92, 94, 100, 108, 110) besteht, die parallel oder in etwa parallel zueinander und senkrecht oder in etwa senkrecht zur Längsachse (28) des Verdichtungsraums (18) verlaufen.

4. Ultraschallschweißvorrichtung nach einem der vorhergehenden Ansprüche,
**dadurch gekennzeichnet,**
**dass** die Struktur der Seitenbegrenzungsfläche (46) durch zur von der Seitenbegrenzungsfläche aufgespannten Ebene zurückversetzte Vertiefungen (58, 60, 62, 64, 74, 76, 82, 84, 86, 88, 90) gebildet ist.

5. Ultraschallschweißvorrichtung nach einem der vorhergehenden Ansprüche,
**dadurch gekennzeichnet**
**dass** die Struktur der Seitenbegrenzungsfläche (46) durch über von der Seitenbegrenzungsfläche aufgespannter Ebene vorstehende Vorsprünge (66, 68, 70, 72, 92, 94, 100, 108, 110) gebildet ist.

6. Ultraschallschweißvorrichtung nach einem der vorhergehenden Ansprüche,
**dadurch gekennzeichnet,**
**dass** die Struktur der Seitenbegrenzungsfläche (44, 46) durch Erhebungen (66, 68, 70, 72, 92, 94, 100, 108, 110) und/oder Vertiefungen (58, 60, 64, 74, 76, 82, 84, 86, 88, 90) in zumindest einem Bereich (A, B) der Seitenbegrenzungsfläche (44, 46) ausgebildet ist, wobei die Erhebungen bzw. Vertiefungen insbesondere quer, vorzugsweise senkrecht zur Längsachse (28) des Verdichtungsraums (18) verlaufen.

7. Ultraschallschweißvorrichtung nach einem der vorhergehenden Ansprüche,
**dadurch gekennzeichnet,**
**dass** die Erhebungen (66, 68, 70, 72, 92, 94, 100, 108, 110) und/oder Vertiefungen (58, 60, 64, 74, 76, 82, 84, 86, 88, 90) einen Querschnitt vorzugsweise in Form eines Dreiecks, eines Trapezes oder eines Kreisabschnittes aufweisen.

8. Ultraschallschweißvorrichtung nach einem der vorhergehenden Ansprüche,
**dadurch gekennzeichnet,**
**dass** die von den Erhebungen und/oder Vertiefungen (74, 76) gebildete Struktur im Schnitt eine Wellengeometrie bildet.

9. Ultraschallschweißvorrichtung nach einem der Ansprüche 1 bis 8,
**dadurch gekennzeichnet,**
**dass** sich die Struktur gleichmäßig über die Seitenbegrenzungsfläche (46, 48) erstreckt.

10. Ultraschallschweißvorrichtung nach einem der Ansprüche 1 bis 8,
**dadurch gekennzeichnet,**
**dass** die Seitenbegrenzungsfläche (44, 46) in ihrem Mittenbereich (B) strukturiert und außerhalb des Mittenbereichs eben ausgebildet ist.

11. Ultraschallschweißvorrichtung nach Anspruch 6,
**dadurch gekennzeichnet,**
**dass** die Erhebungen (66, 68, 70, 72, 108, 110) und/oder Vertiefungen (58, 60, 62, 64, 74, 76, 82, 84, 86, 90) untereinander einen gleichen oder in etwa gleichen Abstand aufweisen.

12. Ultraschallschweißvorrichtung nach Anspruch 6,
**dadurch gekennzeichnet,**
**dass** die Erhebungen und/oder Vertiefungen (82, 84) entlang der Seitenbegrenzungsfläche (46) variieren.

13. Ultraschallschweißvorrichtung nach Anspruch 6,
**dadurch gekennzeichnet,**
**dass** die Erhebungen und/oder Vertiefungen (92, 94) eine sägezahnartige Struktur bilden.

14. Ultraschallschweißvorrichtung nach Anspruch 13,
**dadurch gekennzeichnet,**
**dass** die eine sägezahnartige Geometrie aufweisenden Erhebungen (92, 94) in Gruppen derart angeordnet sind, dass deren Kanten (96, 98) einander zugewandt sind.

15. Ultraschallschweißvorrichtung nach einem der vorhergehenden Anspeiche,
**dadurch gekennzeichnet,**
**dass** die Gegenelektrode (32) von einem entlang einer Seitenfläche (106) der Sonotrode (16) und senkrecht oder in etwa senkrecht zu der Arbeitsfläche (36) der Sonotrode verlaufenden Träger (34) ausgeht, dessen dem Verdichtungsraum (18) zugewandte Seite Seitenbegrenzungsfläche (46) ist oder von der ein außenseitig die Seitenbegrenzungsfläche aufweisendes plattenförmiges Element ausgeht, und dass die Seitenfläche der Sonotrode eine zur Struktur der Seitenbegrenzungsfläche ergänzende Geometrie aufweist.

16. Werkzeug zur Verwendung in einer Ultraschallschweißvorrichtung nach Anspruch 1, in Form des Seitenschiebers (42) oder eines Trägers (34) der Gegenelektrode (32), wobei das Werkzeug mit einer Fläche als Scitenbegreruungsfläche (44, 46) den. Verdichtungsraum (18) begrenzt,
**dadurch gekennzeichnet,**
**dass** die Seitenbegrenzungsfläche (46) strukturiert ist.

17. Werkzeug nach Anspruch 16,
**dadurch gekennzeichnet,**
**dass** die Strukturierung aus rinnen- oder grabenförmigen Vertiefungen (58, 60, 62, 64, 74, 76, 92, 94, 82, 84, 86, 88, 90) und/oder rippenartige Erhebungen oder Vorsprünge (66, 68, 70, 72, 92, 94, 100, 108, 110) besteht, die parallel oder in etwa parallel zueinander und senkrecht oder in etwa senkrecht zur Längsachse (28) des Verdichtungsraums ( 18) verlaufen.

18. Werkzeug nach Anspruch 16 oder 17,
**dadurch gekennzeichnet,**
**dass** die Struktur der Seitenbegrenzungsfläche (46) durch zur von der Seitenbegrenzungsfläche aufgespannten Ebene zurückversetzte Vertiefungen (58, 60, 62, 64, 74, 76, 82, 84, 86, 88, 90) gebildet ist.

19. Werkzeug nach einem der Ansprüche 16 bis 18,
**dadurch gekennzeichnet,**
**dass** die Struktur der Seitenbegrenzungsfläche (46) durch über von der Seitenbegrenzungsfläche aufgespannter Ebene vorstehende Vorsprünge (66, 68, 70, 72, 92, 94, 100, 108, 110) gebildet ist.

20. Werkzeug nach einem der Ansprüche 16 bis 19,
**dadurch gekennzeichnet,**
**dass** die Struktur der Seitenbegrenzungsfläche (44, 46), durch Erhebungen (66, 68, 70, 72, 92, 94, 100, 108, 110) und/oder Vertiefungen (58, 60, 64, 74, 76, 82, 84, 86, 88, 90) in zumindest einem Bereich (A, B) der Seitenbegrenzungsfläche (44, 46) ausgebildet ist, wobei die Erhebungen bzw. Vertiefungen vorzugsweise quer wie senkrecht zur Längsachse (28) des Verdichtungsraums (18) verlaufen.

21. Werkzeug nach einem der Ansprüche 16 bis 20,
**dadurch gekenntzeichnet,**
dass die Erhebungen (66, 68, 70, ?2, 92, 94, 100, 108, 110) und/oder Vertiefungen (58, 60, 64, 74, 76, 82, 84, 86, 88, 90) einen Querschnitt vorzugsweise in Form eines Dreiecks, eines Trapezes oder eines Kreisabschnittes aufweisen.

22. Werkzeug nach einem der Ansprüche 16 bis 21,
**dadurch gekennzeichnet,**
**dass** die von den Erhebungen und/oder Vertiefungen (74, 76) gebildete Struktur im Schnitt eine Wellengeometrie bildet.

23. Werkzeug nach einem der Ansprüche 16 bis 22,
**dadurch gekennzeichnet,**
**dass** sich die Struktur gleichmäßig über die Seitenbegrenzungsfläche (46, 48) erstreckt.

24. Werkzeug nach einem der Ansprüche 16 bis 23,
**dadurch gekennzeichnet,**
**dass** die Seitenbegrenzungsfläche (44, 46) in ihrem Mittenbereich (B) strukturiert und außerhalb des Mittenbereichs eben ausgebildet ist.

25. Werkzeug nach einem der Ansprüche 16 bis 24,
**dadurch gekennzeichnet,**
**dass** die Erhebungen (66, 68, 70, 72, 108, 110) und/oder Vertiefungen (58, 60, 62, 64, 74, 76, 82, 84, 86, 90) untereinander einen gleichen oder in etwa gleichen Abstand aufweisen.

26. Werkzeug nach einem der Ansprüche 16 bis 25,
**dadurch gekennzeichnet,**
**dass** die Erhebungen und/oder Vertiefungen (82, 84) entlang der Seitenbegrenzungsfläche (46) variieren.

27. Werkzeug nach einem der Ansprüche 16-26,
**dadurch gekennzeichnet,**
**dass** die Erhebungen und/oder Vertiefungen (92, 94) eine sägezahnartige Struktur bilden.

28. Werkzeug nach einem der Ansprüche 16 bis 27,
**dadurch gekennzeichnet,**
**dass** die eine sägezahnartige Geometrie aufweisenden Erhebungen (92, 94) in Gruppen derart angeordnet sind, dass deren Kanten (96, 98) einander zugewandt sind.

29. Werkzeug nach einem der Ansprüche 16 bis 28,
**dadurch gekennzeichnet,**
**dass** die Gegenelektrode (32) von einem entlang einer Seitenfläche (106) der Sonotrode (16) und senkrecht oder in etwa senkrecht zu der Arbeitsfläche (36) der Sonotrode verlaufenden Träger (34) ausgeht, dessen dem Verdichtungsraum (18) zugewandte Seite Seitenbegrenzungsfläche (46) ist oder von der ein außenseitig die Seitenbegrenzungsfläche aufweisendes plattenförmiges Element ausgeht, und dass die Seitenfläche der Sonotrode eine zur Struktur der Seitenbegrenzungsfläche ergänzende Geometrie aufweist.

## Claims

1. Ultrasonic welding apparatus for the welding of metal conductors such as strands, particularly for the manufacturing of a splice, with a compression chamber, which has two work areas (36, 38), delimiting the compression chamber on opposite sides, and two lateral delimiting surfaces (44, 46), which run movably relative to each other across the work areas, whereby one work area is section of a sonotrode (16) of the ultrasonic welding apparatus, said sonotrode can be vibrated with ultrasonic oscillation, and opposite work area is part of a counter electrode (32) and the work areas are structured,
**characterized in**
**that** at least one of the lateral delimiting surfaces (44, 46) of the compression chamber (18) is structured at least sectionally.

2. Ultrasonic welding apparatus according to claim 1,
**characterized in**
**that** each of the lateral delimiting surfaces (44, 46) is structured.

3. Ultrasonic welding apparatus according to claim 1 or 2,
**characterized in**
**that** the structuring consists of channel-shaped or trench-shaped depressions (58, 60, 62, 64, 74, 76, 92, 94, 82, 84, 86, 88, 90) and/or rib-like elevations or protrusions (66, 68, 70, 72, 92, 94, 100, 108, 110), which run parallel or approximately parralel to each other and perpendicularly or approximately perpendicularly to the longitudinal axis (28) of the compression chamber (18).

4. Ultrasonic welding apparatus according to one of the previous claims,
**characterized in**
**that** the structure of the lateral delimiting surface (46) is formed by depressions (58, 60, 62, 64, 74, 76, 82, 84, 86, 88, 90), which are set back relative to the plane defined by the lateral delimiting surface.

5. Ultrasonic welding apparatus according to one of the previous claims,
**characterized in**
**that** the structure of the lateral delimiting surface (46) is formed by protrusions (66, 68, 70, 72, 92, 94, 100, 108, 110), which protrude the plane defined by the lateral delimiting surface.

6. Ultrasonic welding apparatus according to one of the previous claims,
**characterized in**
**that** the structure of the lateral delimiting surface (44, 46) is formed by elevations (66, 68, 70, 72, 92, 94, 100, 108, 110) and/or depressions (58, 60, 64, 74, 76, 82, 84, 86, 88, 90) in at least one area (A, B) of the lateral delimiting surface (44, 46), whereby the elevations and/or depressions run particularly across, preferably perpendicularly in relation to the longitudinal axis (28) of the the compression chamber (18).

7. Ultrasonic welding apparatus according to one of the previous claims,
**characterized in**
**that** the elevations (66, 68, 70, 72, 92, 94, 100, 108, 110) and/or depressions (58, 60, 64, 74, 76, 82, 84, 86, 88, 90) have a cross-section preferably in form of a triangle, a trapezoid or the segment of a circle.

8. Ultrasonic welding apparatus according to one of the previous claims,
**characterized in**
**that** the structure, which is formed by the elevations and/or depressions (74, 76), forms in section a wave geometry.

9. Ultrasonic welding apparatus according to one of the claims 1 through 8,
**characterized in**
**that** the structure extends plane over the lateral delimiting surface (46, 48).

10. Ultrasonic welding apparatus according to one of the claims 1 through 8,
**characterized in**
**that** the lateral delimiting surface (44, 46) is designed structured in its central area (B) and plane outside of the central area.

11. Ultrasonic welding apparatus according to claim 6,
**characterized in**
**that** the elevations (66, 68, 70, 72, 108, 110) and/or depressions (58, 60, 62, 64, 74, 76, 82, 84, 86, 90) have an equal or approximately equal distance relative to each other.

12. Ultrasonic welding apparatus according to claim 6,
**characterized in**
**that** the elevations and/or depressions (82, 84) vary along the lateral delimiting surface (46).

13. Ultrasonic welding apparatus according to claim 6,
**characterized in**
**that** the elevations and/or depressions (92, 94) form a sawtooth-like structure.

14. Ultrasonic welding apparatus according to claim 13,
**characterized in**
**that** the elevations (92, 94), which have a sawtooth-like geometry, are arranged in groups in such manner that their edges (96, 98) are facing each other.

15. Ultrasonic welding apparatus according to one of the previous claims,
**characterized in**
**that** the counter electrode (32) originates from a support (34) running along a lateral surface (106) of the sonotrode (16) and perpendicularly or nearly perpendicularly in relation to the work area (36) of the sonotrode, with the side of the support that faces the compression chamber (18) being the lateral delimiting surface (46), or from which preferably a plate-shaped element originates, which has on the outside the lateral delimiting surface, and that the lateral surface of the sonotrode has a geometry supplementing the structure of the lateral delimiting surface.

16. Tool for use in an ultrasonic welding apparatus according to claim 1, in form of a side slide (42) or a support (34) of a counter electrode (32), whereby the tool with a surface as lateral delimiting surface (44, 46) defines the compression chamber (18),
**characterized in**
**that** the lateral delimiting surface (46) is structured.

17. Tool according to claim 16,
**characterized in**
**that** the structuring consists of channel-shaped or trench-shaped depressions (58, 60, 62, 64, 74, 76, 92, 94, 82, 84, 86, 88, 90) and/or rib-like elevations or protrusions (66, 68, 70, 72, 92, 94, 100, 108, 110), which run parallel or approximately parallel to each other and perpendicularly or approximately perpendicularly in relation to the longitudinal axis (28) of the compression chamber (18).

18. Tool according to claim 16 or 17,
**characterized in**
**that** the structure of the lateral delimiting surface (46) is formed by depressions (58, 60, 62, 64, 74, 76, 82, 84, 86, 88, 90), which are set back relative to the plane defined by the lateral delimiting surface.

19. Tool according to one of the claims 16 through 18,
**characterized in**
**that** the structure of the lateral delimiting surface (46) is formed by protrusions (66, 68, 70, 72, 92, 94, 100, 108, 110), which protrude the plane defined by the lateral delimiting surface.

20. Tool according to one of the claims 16 through 19,
**characterized in**
**that** the structure of the lateral delimiting surface (44, 46) is formed by elevations (66, 68, 70, 72, 92, 94, 100, 108, 110) and/or depressions (58, 60, 64, 74, 76, 82, 84, 86, 88, 90) in at least one area (A, B) of the lateral delimiting surface (44, 46), whereby the elevations and/or depressions run preferably across as perpendicularly in relation to the longitudinal axis (28) of the the compression chamber (18).

21. Tool according to one of the claims 16 through 20,
**characterized in**
**that** the elevations (66, 68, 70, 72, 92, 94, 100, 108, 110) and/or depressions (58, 60, 64, 74, 76, 82, 84, 86, 88, 90) have a cross-section preferably in form of a triangle, a trapezoid or the segment of a circle.

22. Tool according to one of the claims 16 through 21,
**characterized in**
**that** the structure, which is formed by the elevations and/or depressions (74, 76), forms in section a wave geometry.

23. Tool according to one of the claims 16 through 22,
**characterized in**
**that** the structure extends plane over the lateral delimiting surface (46, 48).

24. Tool according to one of the claims 16 through 23,
**characterized in**
**that** the lateral delimiting surface (44, 46) is designed structured in its central area (B) and plane outside of the central area.

25. Tool according to one of the claims 16 through 24,
**characterized in**
**that** the elevations (66, 68, 70, 72, 108, 110) and/or depressions (58, 60, 62, 64, 74, 76, 82, 84, 86, 90) have an equal or approximately equal distance relative to each other.

26. Tool according to one of the claims 16 through 25,
**characterized in**
**that** the elevations and/or depressions (82, 84) vary along the lateral delimiting surface (46).

27. Tool according to one of the claims 16 - 26,
**characterized in**
**that** the elevations and/or depressions (92, 94) form a sawtooth-like structure.

28. Tool according to one of the claims 16 through 27,
**characterized in**
**that** the elevations (92, 94), which have a sawtooth-like geometry, are arranged in groups in such manner that their edges (96, 98) are facing each other.

29. Tool according to one of the claims 16 through 28,
**characterized in**
**that** the counter electrode (32) originates from a support (34) running along a lateral surface (106) of the sonotrode (16) and perpendicularly or nearly perpendicularly in relation to the work area (36) of the sonotrode, with the side of the support that faces the compression chamber (18) being the lateral delimiting surface (46), or from which preferably a plate-shaped element originates, which has on the outside the lateral delimiting surface, and that the lateral surface of the sonotrode has a geometry supplementing the structure of the lateral delimiting surface.

## Revendications

1. Soudeuse à ultrasons destinée à souder des conducteurs métalliques, tels que des fils toronnés, en particulier pour réaliser un point nodal, avec une chambre de compression qui présente deux surface de travail (36, 38) délimitant la chambre de compression sur des côtés opposés et deux surfaces de limitation latérales (44, 46) s'étendant transversalement par rapport aux surfaces de travail et réglables l'une par rapport à l'autre, sachant qu'une surface de travail est une section d'une sonotrode (16) de la soudeuse à ultrasons, qui peut être mise en vibration ultrasonore, et que la surface de travail opposée est une section d'une contrélec**trode (32), et que les surfaces de travail sont structurées,**
**caractérisée en ce**
**qu'**au moins une des surfaces de limitation latérales (44, 46) de la chambre de compression (18) est structurée au moins en partie.

2. Soudeuse à ultrasons selon la revendication 1,
**caractérisée en ce**
**que** chacune des surfaces de limitation latérales (44, 46) est structurée.

3. Soudeuse à ultrasons selon la revendication 1 ou 2,
**caractérisée en ce**
**que** la structuration est constituée d'évidements en forme de goulotte ou de tranchée (58, 60, 62, 64, 74, 76, 92, 94, 82, 84, 86, 88, 90) et/ou de protubérances ou de saillies en forme de nervure (66, 68, 70, 72, 92, 94, 100, 108, 110), qui s'étendent parallèlement ou approximativement parallèlement entre eux et perpendiculairement ou approximativement perpendiculairement à l'axe longitudinal (28) de la chambre de compression (18).

4. Soudeuse à ultrasons selon l'une des revendications précédentes,
**caractérisée en ce**
**que** la structure de la surface de limitation latérale (46) est formée par des évidements (58, 60, 62, 64, 74, 76, 82, 84, 86, 88, 90) en retrait par rapport au plan décrit par la surface de limitation latérale.

5. Soudeuse à ultrasons selon l'une des revendications précédentes,
**caractérisée en ce**
**que** la structure de la surface de limitation latérale (46) est formée par des saillies (66, 68, 70, 72, 92, 94, 100, 108, 110) faisant saillie sur le plan décrit par la surface de limitation latérale.

6. Soudeuse à ultrasons selon l'une des revendications précédentes,
**caractérisée en ce**
**que** la structure de la surface de limitation latérale (44, 46) est formée par des protubérances (66, 68, 70, 72, 92, 94, 100, 108, 110) et/ou des évidements (58, 60, 64, 74, 76, 82, 84, 86, 88, 90) dans au moins une zone (A, B) de la surface de limitation latérale (44, 46), sachant que les protubérances et/ou les évidements s'étendent en particulier transversalement, de préférence perpendiculairement à l'axe longitudinal (28) de la chambre de compression (18).

7. Soudeuse à ultrasons selon l'une des revendications précédentes,
**caractérisée en ce**
**que** les protubérances (66, 68, 70, 72, 92, 94, 100, 108, 110) et/ou les évidements (58, 60, 64, 74, 76, 82, 84, 86, 88, 90) présentent une section transversale ayant de préférence la forme d'un triangle, d'un trapèze ou d'un segment de cercle.

8. Soudeuse à ultrasons selon l'une des revendications précédentes,
**caractérisée en ce**
**que** la structure formée par les protubérances et/ou les évidements (74, 76) forme en coupe une géométrie ondulée.

9. Soudeuse à ultrasons selon l'une des revendications 1 à 8,
**caractérisée en ce**
**que** la structure s'étend uniformément sur la surface de limitation latérale (46, 48).

10. Soudeuse à ultrasons selon l'une des revendications 1 à 8,
**caractérisée en ce**
**que** la surface de limitation latérale (44, 46) est structurée dans sa zone médiane (B) et est plane en dehors de la zone médiane.

11. Soudeuse à ultrasons selon la revendication 6,
**caractérisée en ce**
**que** les protubérances (66, 68, 70, 72, 108, 110) et/ou les évidements (58, 60, 62, 64, 74, 76, 82, 84, 86, 90) sont équidistants ou approximativement équidistants.

12. Soudeuse à ultrasons selon la revendication 6,
**caractérisée en ce**
**que** les protubérances et/ou les évidements (82, 84) se diversifient le long de la surface de limitation latérale (46).

13. Soudeuse à ultrasons selon la revendication 6,
**caractérisée en ce**
**que** les protubérances et/ou les évidements (92, 94) forment un structure en dent de scie.

14. Soudeuse à ultrasons selon la revendication 13,
**caractérisée en ce**
**que** les protubérances (92, 94) présentant une géométrie en dent de scie sont disposées en groupes de manière telle que leurs arêtes (96, 98) sont en vis-à-vis.

15. Soudeuse à ultrasons selon l'une des revendications précédentes,
**caractérisée en ce**
**que** la contrélectrode (32) sort d'un support (34) s'étendant le long d'une surface latérale (106) de la sonotrode (16) et perpendiculairement ou approximativement perpendiculairement à la surface de travail (36) de la sonotrode, et dont le côté orienté vers la chambre de compression (18) est une surface de limitation latérale (46), ou que de laquelle sort un élément en forme de plaque du côté extérieur et présentant la surface de limitation latérale, et que la surface latérale de la sonotrode présente une géométrie complétant la structure de la surface de limitation latérale.

16. Outil destiné à être utilisé dans une soudeuse à ultrasons selon la revendication 1, ayant la forme d'un coulisseau latéral (42) ou d'un support (34) de la contrélectrode (32), sachant que l'outil délimite la chambre de compression (18) avec une surface faisant fonction de surface de limitation latérale (44, 46),
**caractérisé en ce**
**que** la surface de limitation latérale (46) est structurée.

17. Outil selon la revendication 16,
**caractérisé en ce**
**que** la structuration constituée d'évidements en forme de goulotte ou de tranchée (58, 60, 62, 64, 74, 76, 92, 94, 82, 84, 86, 88, 90) et/ou de protubérances ou de saillies en forme de nervure (66, 68, 70, 72, 92, 94, 100, 108, 110), qui s'étendent parallèlement ou approximativement parallèlement entre eux et perpendiculairement ou approximativement perpendiculairement à l'axe longitudinal (28) de la chambre de compression (18).

18. Outil selon la revendication 16 ou 17,
**caractérisé en ce**
**que** la structure de la surface de limitation latérale (46) est formée par des évidements (58, 60, 62, 64, 74, 76, 82, 84, 86, 88, 90) en retrait par rapport au plan décrit par la surface de limitation latérale.

19. Outil selon l'une des revendications 16 à 18,
**caractérisé en ce**
**que** la structure de la surface de limitation latérale (46) est formée par des saillies (66, 68, 70, 72, 92, 94, 100, 108, 110) faisant saillie sur le plan décrit par la surface de limitation latérale.

20. Outil selon l'une des revendications 16 à 19,
**caractérisé en ce**
**que** la structure de la surface de limitation latérale (44, 46) est formée par des protubérances (66, 68, 70, 72, 92, 94, 100, 108, 110) et/ou des évidements (58, 60, 64, 74, 76, 82, 84, 86, 88, 90) dans au moins une zone (A, B) de la surface de limitation latérale (44, 46), sachant que les protubérances et/ou les évidements s'étendent de préférence transversalement, tel que perpendiculairement à l'axe longitudinal (28) de la chambre de compression (18).

21. Outil selon l'une des revendications 16 à 20,
**caractérisé en ce**
**que** les protubérances (66, 68, 70, 72, 92, 94, 100, 108, 110) et/ou les évidements (58, 60, 64, 74, 76, 82, 84, 86, 88, 90) présentent une section transversale ayant de préférence la forme d'un triangle, d'un trapèze ou d'un segment de cercle.

22. Outil selon l'une des revendications 16 à 21,
**caractérisé en ce**
**que** la structure formée par les protubérances et/ou les évidements (74, 76) forme en coupe une géométrie ondulée.

23. Outil selon l'une des revendications 16 à 22,
**caractérisé en ce**
**que** la structure s'étend uniformément sur la surface de limitation latérale (46, 48).

24. Outil selon l'une des revendications 16 à 23,
**caractérisé en ce**
**que** la surface de limitation latérale (44, 46) est structurée dans sa zone médiane (B) et est plane hors de la zone médiane.

25. Outil selon l'une des revendications 16 à 24,
**caractérisé en ce**
**que** les protubérances (66, 68, 70, 72, 108, 110) et/ou les évidements (58, 60, 62, 64, 74, 76, 82, 84, 86, 90) sont équidistants ou approximativement équidistants.

26. Outil selon l'une des revendications 16 à 25,
**caractérisé en ce**
**que** les protubérances et/ou les évidements (82, 84) se diversifient le long de la surface de limitation latérale (46).

27. Outil selon l'une des revendications 16 à 26,
**caractérisé en ce**
**que** les protubérances et/ou les évidements (92, 94) forment une structure en dent de scie.

28. Outil selon l'une des revendications 16 à 27,
**caractérisé en ce**
**que** les protubérances (92, 94) présentant une géométrie en dent de scie sont disposées en groupes de manière telle que leurs arêtes (96, 98) sont en vis-à-vis.

29. Outil selon l'une des revendications 16 à 28,
**caractérisé en ce**
**que** la contrélectrode (32) sort d'un support (34) s'étendant le long d'une surface latérale (106) de la sonotrode (16) et perpendiculairement ou approximativement perpendiculairement à la surface de travail (36) de la sonotrode, et dont le côté orienté vers la chambre de compression (18) est une surface de limitation latérale (46), ou que de laquelle sort un élément en forme de plaque du côté extérieur et présentant la surface de limitation latérale, et que la surface latérale de la sonotrode présente une géométrie complétant la structure de la surface de limitation latérale.
